# EUROPÄISCHE PATENTSCHRIFT

(11) **EP 1 131 537 B1**
(45) Veröffentlichungstag und Bekanntmachung des Hinweises auf die Patenterteilung: **06.10.2004**
(21) Anmeldenummer: 99959231.4
(22) Anmeldetag: 02.11.1999
(51) Int. Cl.: F01D 11/22, F01D 25/16, F16C 32/06

(54) **VERFAHREN ZUM BETRIEB EINER STRÖMUNGSMASCHINE**
METHOD FOR OPERATING A TURBO-MACHINE
PROCEDE DE FONCTIONNEMENT D'UNE TURBOMACHINE

(30) Priorität: 11.11.1998 DE 19852047
(43) Veröffentlichungstag der Anmeldung: 12.09.2001
(73) Patentinhaber: SIEMENS AKTIENGESELLSCHAFT, 80333 München (DE)
(72) Erfinder: REICHERT, Arnd, D-47051 Duisburg (DE); BECKER, Bernard, D-45481 Mülheim an der Ruhr (DE)
(86) Internationale Anmeldenummer: PCT/DE1999/003488
(87) Internationale Veröffentlichungsnummer: WO 2000/028190

(56) Entgegenhaltungen:
- DE-A- 4 223 495
- FR-A- 2 722 836
- GB-A- 1 485 773
- SE-C- 502 173
- US-A- 1 823 310
- US-A- 1 895 003
- US-A- 3 453 032
- US-A- 4 309 144
- US-A- 5 219 447
- US-A- 5 330 320
- US-A- 5 795 073

## Beschreibung

Die Erfindung betrifft ein Verfahren zum Betrieb einer Strömungsmaschine, bei dem eine Verschiebung des Rotors gegenüber dem Gehäuse durchgeführt wird. Die Strömungsmaschine weist einen Rotor auf, welcher sich entlang einer Rotorachse durch ein Gehäuse erstreckt und wobei das Gehäuse eine konische Innenwand aufweist. An dem Rotor sind Laufschaufeln angeordnet, die jeweils ein der Innenwand zugewandtes Schaufelende aufweisen, das analog zur Innenwand konisch ist.

In der WO 93/20335 A1 sind ein Verfahren und eine Vorrichtung zur Kontrolle einer Spaltbreite zwischen dem Schaufelende einer Laufschaufel und einem feststehenden Gehäuse einer rotierenden Maschine mit einem Turbinenteil und einem Kompressorteil beschrieben. Die Kontrolle der Spaltbreite erfolgt hierbei so, daß während des Anfahrens der Gasturbine, des Abschaltens der Gasturbine sowie bei Lastwechseln der Gasturbine die Spaltbreite größer ist als während eines kontinuierlichen Betriebes der Gasturbine. Hieraus wird die Gefahr eines Anstreifens einer Turbinenschaufel an das Gehäuse während des Anfahrens, des Abfahrens und Lastwechsel vermindert. Hierzu sind die Rotoren von Verdichter und Turbine fest miteinander verbunden, so daß sie einen einzigen Rotor bilden. Die Gehäuse des Verdichters und die Turbine sind voneinander getrennt und das Verdichtergehäuse ist gegenüber dem Turbinengehäuse verschieblich angeordnet. Durch eine Verschiebung des Verdichtergehäuses erfolgt gleichzeitig eine Verschiebung des gesamten Rotors und damit eine Verschiebung zwischen Turbinenlaufschaufeln und dem Turbinengehäuse.

In der US 1,895,003 sind ein Verfahren und eine Vorrichtung zur kontrolle einer Spaltbrëste bekannt, die aufgrund von Änderungen in der hast entsteht.

In der US-PS 1,823,310 ist eine Turbine, insbesondere eine Dampfturbine, beschrieben, bei der Mittel für eine axiale Verschiebung des Rotors vorgesehen, so daß eine größere Spaltbreite zwischen Turbinenlaufschaufeln und Turbinengehäuse während des An- und Abfahrens der Turbine gegeben ist als während der normalen Betriebsbedingungen der Turbine. Hierdurch wird ein Anstreifen oder eine Beschädigung der Turbinenlaufschaufeln verhindert. Die Mittel zur Verschiebung der Laufschaufeln wirken auf ein Drucklager ein. Dieses ist mit dem Rotor so verbunden ist, daß bei einer axialen Verschiebung des Drucklagers auch der Rotor verschoben wird. Die Mittel umfassen hierbei ein System aus Zahnrädern und Zahnstangen, durch welches das Drucklager und damit auch der Rotor axial verschoben werden. Das gleiche Prinzip der Einstellung der Spaltbreite zwischen Laufschaufeln einer Turbine und einem Turbinengehäuse wird in der FR 2 722 836 A1 für eine Gasturbine mit einem Verdichter angewandt. Die Gasturbine ist hierbei an einem turbinenseitigen Ende axial beweglich in einem Lager gelagert. Eine weitere Lagerung der Gasturbine erfolgt an einem verdichterseitigen Ende über ein Kugellager, welches eine axiale Fixierung der gesamten Gasturbine bewirkt. Dieses mit dem Rotor der Gasturbine fest verbundene Kugellager ist über eine Vorrichtung axial verschiebbar, wodurch auch eine axiale Beweglichkeit des Rotors gegenüber dem Turbinengehäuse gegeben ist. Die Verschieblichkeit des Kugellagers und damit des Rotors gegenüber dem Turbinengehäuse beträgt größenordnungsmäßig +/- 2 mm.

In der US-PS 5,263,817 sind ein Radialverdichter und eine Gasturbine mit einer Vorrichtung für eine aktive Spaltbreitenkontrolle zwischen Laufschaufeln und feststehendem Gehäuse angegeben. An dem Rotor ist ein Kugellager angebracht, dessen äußere Lauffläche in das Gehäuse so eingespannt ist, daß noch eine geringe axiale Beweglichkeit gegeben ist, die durch einen Anschlag begrenzt ist. Die äußere Lauffläche des Lagers ist hierbei zwischen dem Anschlag und einem elektromagnetischen Antrieb eingespannt, die jeweils fest mit dem Gehäuse verbunden sind. Der elektromagnetische Antrieb weist einen Elektromagneten auf, welcher axial benachbart zu einer radialen, fest mit dem Läufer verbundenen ferromagnetischen Scheibe ist. Je nach Stärke des durch den Elektromagneten erzeugten magnetischen Feldes wird die Scheibe mehr oder weniger angezogen, wodurch die axiale Position des gesamten Rotors veränderbar ist. Hierdurch ist eine aktive Kontrolle der axialen Position einer Laufschaufel und damit der Spaltbreite zwischen Laufschaufel und konischem Gehäuse der Turbine einstellbar.

Die DE 42 23 495 A1 zeigt eine Gasturbine, bei der eine Rotorschiebeeinrichtung zur Einstellung eines kleinen Schaufelspiels vorgesehen ist. Die Rotorschiebeeinrichtung besteht aus einem zweiteiligen Pendelgehäuse für die Aufnahme eines Axiallagers, zwei ringförmigen, am Ansauggehäuse befestigten Trägerplatten, auf welchen Druckdosen angebracht sind, mit denen die gesamte Lagerposition und damit die Position des Rotors so einstellbar ist, daß in der Start- und Auslaufphase der Gasturbine ein vergrößertes Spiel im kegelförmigen Schaufelkanal einstellbar ist.

Aufgabe der Erfindung ist es, ein

Verfahren zum Betrieb einer Strömungsmaschine mit axial verschieblichem Rotor zur Wirkungsgradsteigerung und zur Verminderung der Radialspaltverluste anzugeben.

Die auf ein Verfahren zum Betrieb einer Strömungsmaschine gerichtete Aufgabe wird dadurch gelöst, daß eine Verschiebung des Lagerelementes eine Verschiebung des Rotors gegenüber dem Gehäuse bewirkt, so daß entsprechend dem Betriebszustand der Strömungsmaschine ein vorgegebener radialer Spalt zwischen Schaufelende und Innenwand eingestellt wird. Dies kann im wesentlichen passiv derart erfolgen, daß von einer aktiven Regelung der Spaltweite abgesehen wird und eine entsprechend dem jeweiligen Betriebszustand vorgegebene Verschiebung des Rotors durchgeführt wird. Eine solche Verschiebung kann beispielsweise dadurch realisiert werden, daß das Lagerelement entweder mit einem Hydraulikfluid eines vorgegebenen Drucks beaufschlagt wird, so daß sich ein vorgegebener Verschiebungswert einstellt, oder das Lagerelement nicht druckbeaufschlagt wird. Die passive Einstellung der Spaltweite beruht somit darauf, entweder keine Verschiebung des Rotors oder lediglich eine vorgegebene Verschiebung des Rotors durchzuführen. Selbstverständlich ist es mit entsprechenden Vorrichtungen auch möglich, eine variable Verschiebung des Rotors durchzuführen.

Eine Verschiebung des Rotors wird erst dann durchgeführt, wenn ein stationärer Betriebszustand der Strömungsmaschine mit einer dem Betriebszustand entsprechenden vollständigen stationären Temperaturverteilung der einzelnen Komponenten der Strömungsmaschine erreicht ist. Das Erreichen eines solchen Betriebszustandes, insbesondere des normalen Leistungsbetriebszustandes der Strömungsmaschine, kann durch Vorgabe einer vorab bestimmten Zeitdauer, die Messung von Temperaturen im Gehäuse, die Messung von Temperaturdifferenzen, eines sich infolge der Wärmedehnungen einstellenden radialen Spaltes, welcher vorzugsweise gemessen wird, und durch eine Relativverschiebung zwischen Gehäuse und Rotor bestimmt werden. Vorzugsweise wird eine Relativdehnung zwischen Rotor und Gehäuse an dem zumindest als Axiallager dienenden Wellenlager gegenüberliegenden Ende des Rotors gemessen.

Bei einer axialen Verschiebung dieses Lagerelementes tritt gleichzeitig eine axiale Verschiebung des Rotors auf.

Dies ist insbesondere vorteilhaft bei Strömungsmaschinen wie Verdichtern, Gasturbinen und Dampfturbinen. Hierdurch lassen sich Strömungsverluste in radialen Spalten einer Turbine, insbesondere einer stationär betriebenen Gasturbine mit einer konischen Innenwand, verringern. Die radialen Spalte sind hierbei Freiräume zwischen der radial äußeren Kante von auf dem Rotor aufgebrachten Laufschaufeln und den gegenüberliegenden Gehäuseteilen (Innenwand). Aufgrund der Druckdifferenz zwischen der Druck- und der Saugseite der Laufschaufeln strömt während des Betriebs der Turbine Aktionsfluid durch diese Spalte; im Falle einer Gasturbine Gas. Der durch die Spalte strömende Massenstrom nimmt nicht an der Arbeitsumsetzung in den axial voneinander beabstandeten Reihen von Laufschaufeln teil und mindert dadurch den Wirkungsgrad der Turbine. Bei einer Gasturbine können ca. 30% der Strömungsverluste durch Spaltleckagen verursacht sein. Dies bedeutet eine Absenkung des Wirkungsgrades der Gasturbine um bis zu 4%. Die Größe des Leckmassenstroms und damit auch die Höhe der verursachten Strömungsverluste wird durch die Spaltweite der Radialspalte bestimmt. Hierbei kommt es für stationär arbeitende Gasturbinen auf die sich im Betrieb in der Beharrung, d.h. während des eingestellten Leistungsbetriebszustands, sich einstellenden Spaltweite an. Diese Spaltweite wird im folgenden als Warmspalt bezeichnet. Gründe für das Vorhandensein dieser Warmspalte sind beispielsweise durch Fertigungstoleranzen bewirkte Abweichungen sowie eine Sicherheitsreserve, beispielsweise für außergewöhnliche Betriebszustände im Falle von Erdbeben oder dergleichen. Etwa die Hälfte des sich einstellenden Warmspaltes entsteht durch zeitabhängige Dehnungen der einzelnen Turbinenkomponenten, wobei sich ein stationärer Zustand des Warmspaltes nach einer vollständigen Durchwärmung der Turbine einstellt, wobei in diesem Betriebszustand der Turbine die einzelnen Turbinenkomponenten, wie Gehäuseteile oder Laufschaufeln, stark unterschiedliche Temperaturen annehmen können, die u.a. auch Verkrümmungen der einzelnen Bauteile bewirken können. Mit einem Wellenlager ist u.a. auf einfache Art und Weise nach Erreichen eines stationären Betriebszustandes, insbesondere eines Leistungsbetriebszustandes einer Strömungsmaschine, eine axiale Verschiebung des Rotors durchführbar, so daß die Größe des Warmspaltes unter Berücksichtigung gegebenenfalls vorhandener Fertigungsabweichungen sowie Sicherheitsreserven auf einen vorgebbaren möglichst geringen Wert einstellbar ist.

Das bekannte Wellenlager weist eine weitere Lagerfläche auf, die von der anderen Lagerfläche axial beabstandet ist. Beide Lagerflächen dienen hierbei der Lagerung einer jeweils anderen untereinander axial beabstandeten Rotorfläche. Jede der Lagerflächen kann hierbei durch ein einzelnes, insbesondere ringförmiges Lagerelement oder durch eine Vielzahl von Lagerelementen gebildet sein. Die beiden Lagerflächen sind hierbei jeweils axial verschieblich über entsprechende Lagerelemente ausgebildet. Das Wellenlager ist hierbei ein Schublager, bei dem es eine belastete Seite (Lagerfläche) gibt, die den überwiegend in dieser Richtung auftretenden Axialschub des Rotors aufnimmt, und eine unbelastete Seite (die weitere Lagerfläche), die beispielsweise in Übergangszuständen (Start) oder in Störfällen kurzzeitig Last aufnimmt. Beide Lagerflächen sind hierbei während des Betriebs des Lagers mit einem entsprechenden Schmierfilm (Ölfilm) versehen, so daß sie als entsprechende Gleitflächen dienen. Ein durch den Schmierfilm vorhandenes Lagerspiel liegt hierbei bevorzugt in der Größenordnung von einigen Zehntel Millimetern. Durch ein, insbesondere gleichgerichtete, Verschiebung der beiden Lagerflächen kann das sich einstellende Lagerspiel aufrechterhalten werden. Hierdurch wird ein einseitiges, kleineres Lagerspiel an einer der Lagerflächen vermieden, so daß keine zusätzlichen Verluste auftreten. Weiterhin wird hierdurch ein zu großes Lagerspiel vermieden, welches bei einer wechselnden Achsschubrichtung des Rotors zu ungewünschten heftigen Bewegungen des Rotors mit hohen Spitzenbeschleunigungen und Massenkräften führen könnte.

Es ist ebenfalls möglich daß eine Lagerfläche durch eine axiale Verschiebung eines Lagerelementes oder mehrerer Lagerelemente axial verschiebbar ist und die andere Lagerfläche axial fixiert ist. In diesem Fall erfolgt eine Verschiebung des Rotors nur über eine Lagerfläche, wodurch eine Ausführung des Wellenlagers mit geringerem konstruktivem und versorgungstechnischem Aufwand erreichbar ist.

Das axial verschiebliche Lagerelement ist ein axial verschieblicher Ringkolben. Hierdurch ist eine besonders gleichmäßige Belastung des Wellenlagers sowie der Rotorflächen erreichbar. Dies ist weiterhin besonders günstig, wenn das axial verschiebliche Lagerelement auf hydraulischem Wege verschieblich ist, da hierbei eine gleichmäßige Druckverteilung über den gesamten Umfang des Ringkolbens gewährleistet ist. Es ist allerdings ebenfalls möglich eine Vielzahl axial verschieblicher Lagerelemente (Lagerklötze) vorzusehen, die insbesondere auf einem den Rotor konzentrisch umgebenden Kreis angeordnet sind.

Das verschiebliche Lagerelement ist auf hydraulischem Wege verschieblich. Hierbei wird das Lagerelement mit einem Hydraulikfluid, insbesondere einem Öl beaufschlagt, so daß eine Verschiebung des Rotors selbst bei einem Vollastbetrieb der Strömungsmaschine gewährleistet ist. Vorzugsweise wird hierbei nach Erreichen einer gewissen axialen Position das für die zur Verschiebung erforderliche Ölvolumen konstant gehalten. Da Öl bekanntermaßen im wesentlichen ein inkompressives Fluid ist, verändert sich bei einem Konstanthalten der Ölmenge dann die axiale Position der Lagerflächen und damit des Rotors auch unter schwankenden Kräften (Axialschub) allenfalls unwesentlich. Um das Ölvolumen entsprechend konstant zu halten, kann von der Verwendung elastischer Zuleitungen (Schläuche) abgesehen werden und es können entsprechend starre Leitungssysteme verwendet werden. Hierdurch ist vermieden, daß bei wechselnden Schubkräften und konstantem Öldruck die axiale Position des Rotors zwischen einem linken Anschlagspunkt und einem rechten Anschlagspunkt wechselt. Ist das Hydraulikfluid, insbesondere das Öl, in einem Raumbereich konstanten Volumens eingesperrt, dann ändert sich bei einer veränderten Schubkraft auch die Gegenkraft auf der Lagerfläche, so daß das Kräftegleichgewicht erhalten bleibt. Für den Fall, daß keine aktive Regelung der axialen Position des Rotors durchgeführt wird, ist in beiden axialen Richtungen ein Anschlag vorhanden, wobei durch einen entsprechenden Öldruck ein dem axialen Schub des Rotors entgegenwirkender und diesen deutlich übersteigender Druck vorhanden ist. Vorzugsweise erfolgt die Verschiebung hierbei über zwei in axialer Richtung verschiebbare Lagerflächen, wobei das Volumen des auf die Lagerflächen drückenden Hydraulikfluids (Öl) so verändert wird, bis sich eine gewünschte axiale Position des Rotors einstellt und dann die jeweiligen Volumina des Hydraulikfluides konstant gehalten werden. Durch die konstanten Volumina wird erreicht, daß die über den Öldruck hervorgerufene, auf die Lagerfläche wirkende Kraft gerade entgegengesetzt gleich dem axialen Schub des Rotors ist. Für die Versorgung mit dem Hydraulikfluid wird vorzugsweise bei einem Wellenlager, welches eine Gleitlagerung über ein Schmiermittel (Hydraulikfluid) vorsieht, auf eine bereits vorhandene Hydraulikversorgung zurückgegriffen. Hierzu kann beispielsweise ein bereits zum Anheben der Welle bei niedrigen Drehzahlen verwendetes Hydrauliksystem benutzt werden, welches in der Lage ist, entsprechend hohe Drücke zu erzeugen. Ein solches System könnte somit gegebenenfalls auch bei Normalbetrieb einer Strömungsmaschine zusätzlich eingeschaltet sein, um eine axiale Verschiebung des Rotors zu bewirken. Hierzu kann eine zusätzliche Hochdruckleitung zum Wellenlager geführt sein. Bei dieser Versorgung steht ein Druck des Hydraulikfluides, insbesondere Öldruck, von bis zu 160 bar zur Verfügung.

Alternativ ist es ebenfalls möglich eine mechanische Verschiebungseinrichtung zur Verschiebung zumindest eines Lagerelementes vorzusehen. Diese mechanische Verschiebungseinrichtung weist vorzugsweise ein Verschiebungselement, wie eine Spindel oder dergleichen, und einen Verschiebungsantrieb auf. Der Verschiebungsantrieb ist vorzugsweise ein Elektromotor. Andere Möglichkeiten zur Ausgestaltung des Verschiebungsantriebs können mechanische Verschiebungsantriebe sein, welche beispielsweise die Rotation des Rotors bei Betrieb der Strömungsmaschine oder die Strömung des durch die Strömungsmaschine strömenden Aktionsfluides ausnutzen.

Das Wellenlager ist vorzugsweise als ein Gleitlager ausgeführt, bei dem zwischen Lagerfläche und Rotorfläche sich ein Film aus einem Schmiermittel, insbesondere Hydrauliköl, ausbildet. Ein solches Lager ist besonders vorteilhaft für die Lagerung eines schweren Rotors, wie er beispielsweise bei stationären Gasturbinen zur Erzeugung elektrischen Stroms eingesetzt wird.

Die Verschieblichkeit der Lagerflächen und damit des Rotors beträgt vorzugsweise zwischen 0,5 mm und 5 mm. Diese Verschieblichkeit ist vorzugsweise in einer Richtung gegeben, so daß die Spaltbreite zwischen Laufschaufeln der Strömungsmaschine und der Innenwand des Gehäuses der Strömungsmaschine während des normalen Betriebes der Strömungsmaschine reduziert wird.

Das Wellenlager weist ein Abstandselement, beispielsweise einen Anschlag, auf, durch welches die Einhaltung eines vorgegebenenen minimalen Abstandes zwischen den Lagerflächen gewährleistet ist. Dies ist insbesondere dann von Vorteil, wenn durch das Lagerelement eine Verschiebung des Rotors entgegen der auf den Rotor wirkenden resultierenden Kraft, beispielsweise hervorgerufen durch das durch die Strömungsmaschine strömende Aktionsfluid, erfolgt. In einem solchen Fall gewährleistet das Abstandselement selbst bei einem Ausfall der Hydraulikversorgung oder des Verschiebungsantriebes, daß der Rotor eine axiale Position annimmt, die er auch ohne eine axiale Verschiebung durch das Lagerelement angenommen hätte. Hierdurch ist selbst bei einem Ausfall der axialen Verschiebung des Lagerelementes die Betriebssicherheit der Strömungsmaschine gewährleistet. Durch den in einer Gasturbine auftretenden Axialschub wird in diesem Fall der Rotor durch die Gaskräfte in seine Ausgangslage zurückgedrückt.

Die Strömungsmaschine weist ein Gehäuse auf mit einer sich in axialer Richtung konisch erstreckenden Innenwand, und bei der der durch das Gehäuse geführte Rotor Laufschaufeln aufweist, die an ihrem der Innenwand zugewandten Schaufelende zur Innenwand analog konisch verlaufen. Die Strömungsmaschine weist hierbei ein Wellenlager auf, das an eine radiale Rotorfläche angrenzt, zwischen zwei radialen Rotorflächen angeordnet ist, und zumindest ein axial verschiebliches Lagerelement zur Verschiebung des Rotors aufweist.

Durch die zumindest bereichsweise konische (kegelige) Kontur der Innenwand des Gehäuses der Strömungsmaschine erfolgt eine Spaltveränderung, wenn der Rotor relativ zum Gehäuse verschoben wird. Bei der angegebenen Strömungsmaschine ist die Relativlage von Rotor und Gehäuse im Beharrungszustand (stationärer Leistungsbetriebszustand) 'der Turbine so veränderbar, daß der Warmspalt um den Anteil verringert wird, der die instationären Wärmedehnungen berücksichtigt. Solche instationären Wärmedehnungen treten in der Strömungsmaschine während der Zeitdauer auf, bis sämtliche Komponenten der Strömungsmaschine ihre stationäre für den Betriebszustand charakteristische Betriebstemperatur und damit ihre entsprechenden thermischen Dehnungen (Verkrümmungen) dauerhaft angenommen haben.

Vorzugsweise ist die Strömungsmaschine eine Gasturbine, eine Flugtriebwerksturbine oder eine stationäre Gasturbine zur Erzeugung elektrischen Stroms. Eine stationäre Gasturbine kann hierbei eine elektrische Leistung von über 60 MW abgeben.

Die Turbine der Strömungsmaschine weist vorzugsweise zumindest zwei axial voneinander beabstandete Reihen von Laufschaufeln (Schaufelreihen) auf, wobei das Gehäuse und/oder die Schaufelenden so gestaltet sind, daß eine axiale Verschiebung des Rotors für jede Schaufelreihe in etwa den gleichen Radialspalt ergibt. Hierzu ist die Schräge (Konizität) in allen Turbinenstufen, d.h. Schaufelreihen, in etwa gleich.

Das Wellenlager, die Strömungsmaschine sowie das erfindungsgemässe Verfahren zum Betrieb der Strömungsmaschine werden anhand des nachfolgenden Ausführungsbeispiels beispielhaft erläutert. Hierbei zeigen in teilweise schematischer und nicht maßstäblicher Darstellung
- FIG 1: einen Längsschnitt durch eine Gasturbine,
- FIG 2: ein Wellenlager mit einem hydraulisch verschieblichen Lagerelement,
- FIG 3: ein Wellenlager mit einem elektromechanisch verschieblichen Lagerlement und
- FIG 4: einen Ausschnitt durch einen Längsschnitt einer Turbine mit konischem Gehäuse.

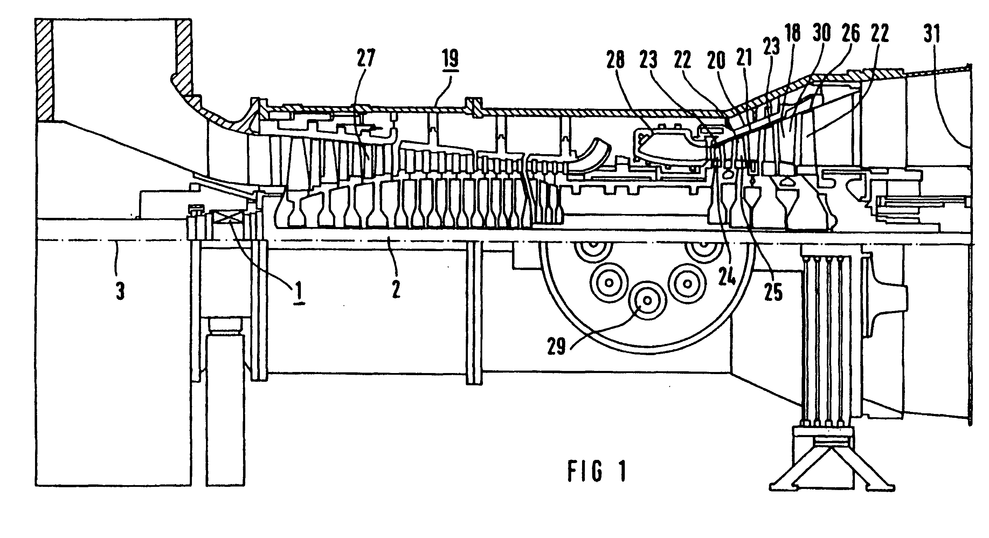

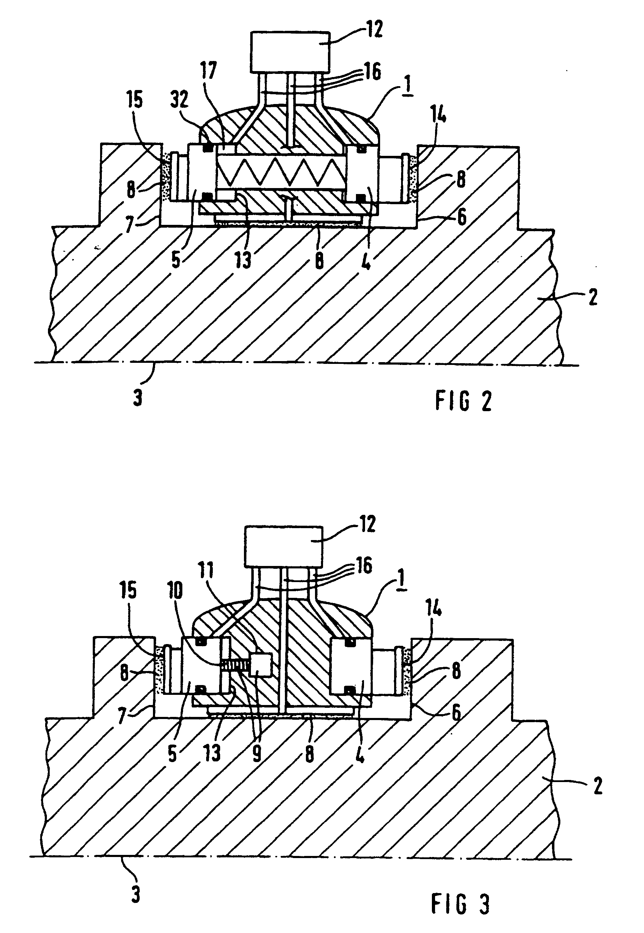

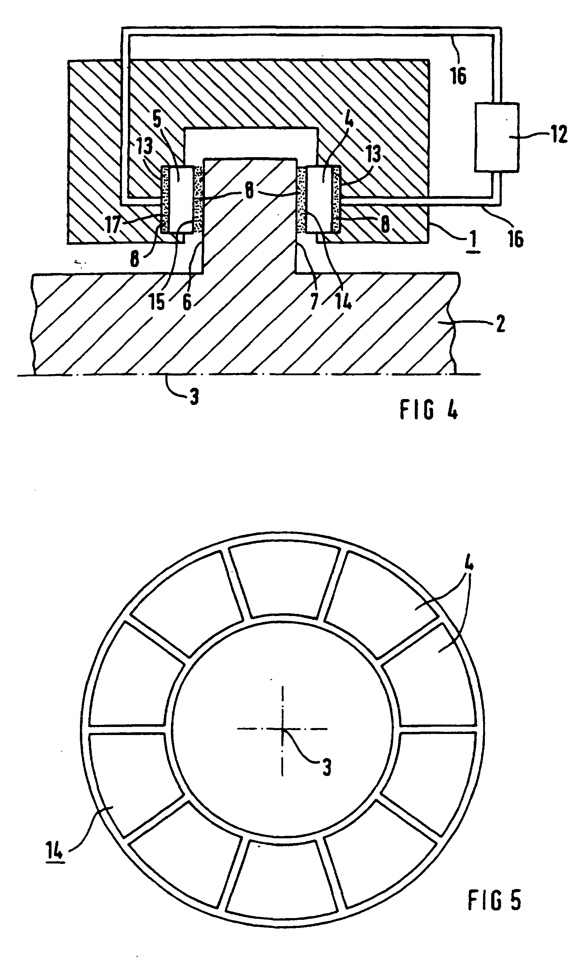

Figur 1 zeigt einen Längsschnitt durch eine Strömungsmaschine 19, im vorliegenden Fall eine Gasturbine. Diese weist einen Verdichter 27 sowie die eigentliche Turbine 18 auf. Zwischen Verdichter 27 und Turbine 18 ist eine Brennkammer 28 mit einer Mehrzahl von Brennern 29 angeordnet. Die Gasturbine 19 weist einen Rotor 2 auf, welcher durch nicht näher spezifizierte Rotorscheiben nach dem Zugankerprinzip hergestellt ist. Die Gasturbine 19 weist verdichterseitig ein Wellenlager 1 (siehe Figur 2 und Figur 3) auf. Die eigentliche Turbine 18 hat in einem Gehäuse 20 eine in axialer Richtung sich konisch erweiternde Innenwand 21, welche aus nicht näher spezifizierten Wandsegmenten und Leitschaufeln 30 mit ebenfalls nicht näher spezifizierten Leitschaufeln-Plattformen gebildet ist. Die Leitschaufel-Plattformen und die Wandsegmente können jeweils eine unterschiedliche Neigung gegenüber der Rotorachse 3 des Rotors 2 aufweisen. Mit dem Rotor 2 sind Laufschaufeln 22 verbunden, die in insgesamt vier Laufschaufelreihen 24, 25 angeordnet sind, welche axial voneinander beabstandet sind,. Jede Laufschaufel 22 weist ein der Innenwand 21 zugewandtes Schaufelende 23 auf, welches eine der Innenwand 21 entsprechende Schräge (Neigung gegenüber der Rotorachse 3) besitzt. Zwischen jedem Schaufelende 23 und dem zugeordneten Bereich der Innenwand 21 ist ein radialer Spalt 26 (siehe Figur 4) gebildet. Die Turbine 18 wird während eines normalen Betriebes von einem nicht dargestellten Heißgas durchströmt, welches von der Brennkammer 28 in die Turbine 18 gelangt und aus dieser an einem Turbinenauslaß 31 austritt.

In Figur 2 ist ein Wellenlager 1, welches als feststehendes Gleitlager ausgebildet ist, in einem Längsschnitt dargestellt. Das Wellenlager 1 umschließt den Rotor 2 in Umfangsrichtung und ist axial zwischen zwei radialen Rotorflächen 6, 7 angeordnet. Das Wellenlager 1 weist zwei axial voneinander beabstandete Lagerelemente 4, 5 auf, welche eine jeweilige Lagerfläche 14, 15 besitzt. Die Lagerfläche 15 des Lagerelementes 5 ist der Rotorfläche 7 unmittelbar benachbart und von dieser durch einen Film aus einem Hydraulikfluid (Hydrauliköl) 8 getrennt. Analog hierzu ist die Lagerfläche 14 durch Hydraulikfluid 8 von der Rotorfläche 6 getrennt. Weiterhin liegt ein Film aus Hydraulikfluid 8 in Umfangsrichtung zwischen dem Rotor 2 und dem Wellenlager 1 an. Das Wellenlager 1 ist hierbei ein Axial- und Radiallager. Das Wellenlager 1 ist als Axiallager ausgebildet , wobei ein separates Radiallager vorgesehen ist. Das Lagerelement 5 ist axial verschieblich, wobei zur Axialverschiebung in dem Wellenlager 1 ein Ölraum 17 angeordnet ist, in den Hydrauliköl unter einem hohen Druck einspeisbar ist, so daß eine axiale Verschiebung des Lagerelementes 5 erreicht wird. Das Lagerelement 5 weist zum Ölraum 17 hin an einem Innendurchmesser und einem Außendurchmesser jeweils einen Dichtring 32 auf. Das Lagerelement 5 ist vorzugsweise als Kreisringkolben ausgebildet. Das Lagerelement 4 ist ebenfalls axial verschieblich ausgebildet. Zum Ölraum 17, zum Lagerelement 4 sowie zum Außenumfang des Rotors 2 führt jeweils eine Zuleitung 16 für Hydraulikfluid 8, welche mit einer Hydraulikversorgung 12 verbunden sind. Die Hydraulikversorgung 12 weist ein nicht näher dargestelltes Reservoir für Hydraulikfluid 8 sowie entsprechende Hydraulikpumpen zur Erzeugung eines hohen Druckes (nicht dargestellt) sowie zur Zuführung von Hydraulikfluid an die Lagerflächen 6, 7 sowie den Außenumfang des Rotors 2 auf. Die Hydraulikversorgung 12 ist hierbei vorzugsweise so ausgebildet, daß mit einem entsprechenden Druck Hydraulikfluid zu den Lagerelementen 4 und 5 führbar ist, so daß eine axiale Verschiebung des Rotors 3 erreicht wird. Nach Erreichen der axialen Verschiebung des Rotors 2 ist es über die Hydraulikversorgung 12 oder gegebenenfalls eine andere, nicht dargestellte Einrichtung, beispielsweise mittels einem oder mehreren Absperrventilen, möglich, das Volumen des auf die Lagerelemente 4 und 5 wirkenden Hydraulikfluides jeweils konstant zu halten. Hierdurch ist erreicht, daß aufgrund der Inkompressibilität des Hydraulikfluides selbst bei Änderungen des axialen Schubes des Rotors 2 in dem Wellenlager 1 eine jeweils entgegengerichtete gleich große Gegenkraft erzeugt wird und somit der Rotor 2 in der gewünschten axialen Position verbleibt.

In Figur 3 ist ebenfalls in einem Längsschnitt ein weiteres Wellenlager 1 dargestellt, welches gegenüber dem Wellenlager nach Figur 2 keine hydraulische Verschiebung des Lagerelements 5, sondern eine Verschiebung des Lagerelementes 5 auf elektromechanischem Wege angibt. Im Hinblick auf die sonstige Ausgestaltung des Wellenlagers 1 gemäß Figur 3 sei auf die Beschreibung zu Figur 2 verwiesen. An das Lagerelement 5 greift im Inneren des Wellenlagers 1 ein Verschiebungselement 10, insbesondere insbesondere eine Spindel, an, welches durch einen Verschiebunbgsantrieb 11, hier ein Elektromotor, in axialer Richtung beweglich ist. Mit weiteren nicht dargestellten Komponenten, wie eine Stromversorgung mit entsprechenden elektrischen Leitungen, bilden das Verschiebungselement 10 und der Verschiebungsantrieb 11 eine mechanische Verschiebungseinrichtung 9 zur axialen Verschiebung des Lagerelementes 5.

In dem Wellenlager 1 ist ein Abstandselement 13 (siehe Figur 2 oder 3), hier als ein Anschlag ausgeführt, vorgesehen. Durch das Abstandselement 13 ist eine axiale Verschiebung des Lagerelements 5 in Richtung des Lagerelements 4 begrenzt. Hierdurch ist auch eine axiale Bewegung des Rotors 2 in Richtung des Lagerelements 4 begrenzt. Dies stellt sicher, daß keine Verschiebung des Rotors 2 in Richtung zum Turbinenaustritt 31 erfolgt, welche nicht durch reine Wärmedehnungen hervorgerufen wird und zu einer Verbreiterung des Radialspalts und damit höheren Wirkungsgradverlusten führt. Selbst bei einem Ausfall der Hydraulikversorgung bzw. der Verschiebungseinrichtung 9 ist somit der Radialspalt 26 nicht größer als bei einer Gasturbine 19, welche keinerlei Ausgleich des radialen Spaltes 26 infolge von Wärmedehnungen des Rotors 2 duchführt.

In Figur 4 ist eine weiteres Wellenlager 1, welches als ein axiales Gleitlager ausgebildet ist, dargestellt. Gegenüber den in den Figuren 2 und 3 dargestellten Wellenlagern umschließt das Wellenlager 1 einen sich in radialer Richtung erstreckenden Wellenringbereich, welcher die beiden Rotorflächen 6 und 7 bildet. An die beiden Rotorflächen 6 und 7 grenzen jeweils die beiden Lagerflächen 14 und 15 an und sind von den Rotorflächen 6 und 7 jeweils durch ein entsprechendes Schmiermittel, insbesondere Hydrauliköl, beabstandet. Hinsichtlich der weiteren Wirkungsweise und konstruktiven Ausgestaltung des Wellenlagers 1 sei auf die Ausführungen bezüglich der Wellenlager gemäß Figuren 2 und 3 verwiesen.

In Figur 5 ist in einem Querschnitt ein Wellenlager 1 dargestellt, welches eine im wesentlichen kreisringförmige Lagerfläche 14 aufweist. Die Lagerfläche 14 ist durch eine Mehrzahl von Lagerelementen 4, Lagerklötzen, gebildet. Die Lagerelemente 4 können hierbei jeweils einzeln in axialer Richtung verschiebbar sein oder gruppenweise oder alle zusammen mittels eines ringförmigen Kraftübertragungselementes, welches nicht dargestellt ist, in axialer Richtung bewegt werden. Es ist selbstverständlich möglich, daß die Lagerfläche 14 durch ein einziges kreisringförmiges Lagerelement gebildet ist.

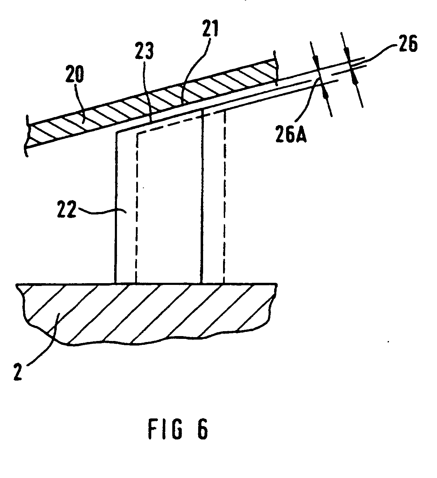

In Figur 6 ist in einem Längsschnitt ein Ausschnitt durch eine Strömungsmaschine 19 mit sich konisch erweiterndem Gehäuse 20 dargestellt. Auf einem Rotor 2 ist beispielhaft eine Laufschaufel 22 dargestellt, deren Schaufelende 23 analog zur Innenwand 21 des Gehäuses mit der gleichen Schräge ausgeführt ist. Die gestrichelt dargestellte Laufschaufel 22 entspricht einem Betriebszustand der Strömungsmaschine 19, bei der eine Wärmedehnung des Rotors 2 stattgefunden hat. Durch diese Wärmedehnung ist ein relativ großer radialer Spalt 26A zwischen dem Schaufelende 23 und der Innenwand 21 entstanden, durch welchen Strömungsverluste in der Strömungsmaschine 19 auftreten, die eine Verringerung des Wirkungsgrades bedingen. Die durchgezogen dargestellte Laufschaufel 22 stellt einen Betriebszustand der Strömungsmaschinde 19 dar, bei der über ein Wellenlager 1 gemäß Figur 2 oder 3 eine Verschiebung des Rotors 2 zur Verringerung des radialen Spaltes 26 durchgeführt wurde. Der radiale Spalt 26 ist mithin deutlich schmäler als der radiale Spalt 26A bei unverschobenem Rotor 2. Durch die Verschiebung des Rotors 2 über das Wellenlager 1 mit einem axial verschieblichen Lagerelement 5 wird eine Verringerung der Strömungsverluste in den radialen Spalten 26 der Strömungsmaschine 19 erreicht. Besonders wirksam ist dieses Verfahren zur Verringerung der Strömungsverluste bei stationär betriebenen Gasturbinen, welche über einen langen Zeitraum in einem Leistungsbetriebszustand gefahren werden.

## Patentansprüche

1. Verfahren zum Betrieb einer Gasturbine,
bei dem an einem Rotor (2) Laufschaufeln (22) angeordnet sind, deren Schaufelenden (23) mit einer konischen Innenwand (21) jeweils einen im Betrieb der Gasturbine wärmebedingt vergrößernden radialen Spalt (26) bilden,
wobei über ein mechanisches Verschiebungselement (9) der Rotor (2) so axial verschiebbar ist, dass die wärmebedingte Vergrößerung des Spaltes (26) kompensiert wird,
**dadurch gekennzeichnet, dass**
die zur Kompensation nötige Axialverschiebung des Rotors (2) erst nach Erreichen eines stationären Betriebszustandes der Gasturbine durchgeführt wird.

2. Verfahren nach Anspruch 1,
bei dem das Erreichen des stationären Betriebszustandes der Gasturbine über eine vorgegebene Zeitdauer, einen sich infolge der Wärmedehnungen einstellenden axialen Spalt (26) und/oder eine Relativverschiebung zwischen Gehäuse (20) und Rotor (2) bestimmt wird.

## Claims

1. Method for operating a gas turbine, in which rotor blades (22) are arranged on a rotor (2), the blade tips (23) of which rotor blades, together with a conical inner wall (21), in each case form a radial gap (26) which increases due to heat during operation of the gas turbine, it being possible for the rotor (2) to be displaced in the axial direction by means of a mechanical displacement element (9), in such a way that compensation is provided for the increase in the gap (26) due to heat, **characterized in that** the axial displacement of the rotor (2) which is required for the compensation is only carried out after a steady operating state of the gas turbine has been reached.

2. Method according to Claim 1, in which the reaching of the steady operating state of the gas turbine is determined on the basis of a predetermined duration, an axial gap (26) which is established as a result of the thermal expansions and/or a relative displacement between casing (20) and rotor (2).

## Revendications

1. Procédé pour faire fonctionner une turbine à gaz,
dans lequel, il est monté sur un rotor (2) des aubes (22) mobiles, dont les extrémités (23) forment avec une paroi (21) intérieure conique respectivement un intervalle (26) radial, s'agrandissant en fonctionnement de la turbine en raison de la chaleur, le rotor pouvant coulisser axialement par un élément (9) mécanique de coulissement de façon à compenser l'agrandissement dû à la chaleur de l'intervalle (26),
**caractérisé en ce que**,
on procède au décalage axial, nécessaire à la compensation, du rotor (2) seulement après qu'un état de fonctionnement stationnaire de la turbine à gaz à été atteint.

2. Procédé suivant la revendication 1,
dans lequel, on détermine que l'état de fonctionnement stationnaire de la turbine à gaz est atteint par un laps de temps prescrit, un intervalle (26) axial s'établissant en raison des dilatations thermiques et/ou un coulissement relatif entre le fourreau (20) et le rotor (2).
